# EUROPEAN PATENT SPECIFICATION

(11) **EP 1 508 101 B1**
(45) Date of publication and mention of the grant of the patent: **19.12.2018**
(21) Application number: 03728159.9
(22) Date of filing: 27.05.2003
(51) Int. Cl.: G06F 17/00, H04L 12/18, H04L 29/12

(54) **APPARATUS AND METHOD FOR BROADCASTING DATA WITHIN WIRELESS COMMUNICATION SERVICE AREA**
VORRICHTUNG UND VERFAHREN ZUM RUNDSENDEN VON DATEN IN EINEM DRAHTLOSEN KOMMUNIKATIONSDIENSTBEREICH
APPAREIL ET PROCÉDÉ PERMETTANT DE DIFFUSER DES DONNÉES DANS UNE ZONE DE SERVICE DE COMMUNICATION SANS FIL

(30) Priority: 28.05.2002 KR 2002029707; 17.09.2002 KR 2002056456; 04.04.2003 KR 2003021524
(43) Date of publication of application: 23.02.2005
(73) Proprietor: Samsung Electronics Co., Ltd., Suwon-si, Gyeonggi-do, 443-742 (KR)
(72) Inventor: OH, Jong Taek, Kangnam-Gu, Seoul 135-081 (KR)
(74) Representative: Grünecker Patent- und Rechtsanwälte PartG mbB
(86) International application number: PCT/KR2003/001039
(87) International publication number: WO 2003/100652

(56) References cited:
- WO-A1-01/65817
- WO-A2-01/78321
- JP-A- 2000 244 488
- KR-A- 19990 060 517
- KR-A- 20020 009 591
- KR-A- 20020 019 085
- US-A1- 2002 057 662
- US-B1- 6 181 697

## Description

### Technical Field

The present invention relates to a technique field of wireless broadcasting service; and, more particularly, to an apparatus and method for reputedly transmitting broadcasting data received through the Internet to a plurality of mobile IP terminals, which are located inside of wireless communication service area, without information of IP address of a broadcasting server by using wireless base stations in case that the IP address of the terminal is frequently changed caused by mobility of the terminal.

### Background Arts

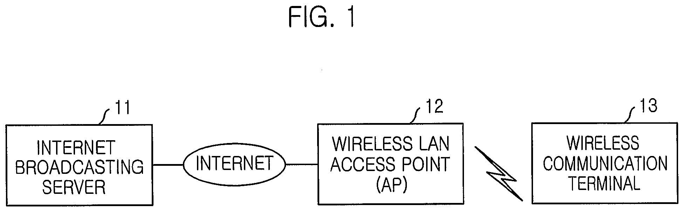

Recently, availability of information has been incredibly increased and ownership of information has been widely opened to the public by rapid development of the Internet. Also, the technology of communication has been developed for providing convenience and various Internet services. Such a development of communication technology makes it possible to provide a wireless Internet broadcasting service by using conventional wireless LAN access point (AP) as shown in Fig.1. Fig. 1 is a diagram showing a system for conventional data broadcasting service system. Referring to Fig. 1, a wireless communication terminal 13 receives Internet broadcasting data from an Internet broadcasting server 11 through the wireless LAN access point AP 12, which provides a connection to the Internet. However, in the system of Fig. 1 requires a unique Internet protocol IP address for the wireless communication terminal 13 and requires pre-setting a web address of desired broadcasting site such as the Internet broadcasting server 11. Furthermore, when an Internet broadcasting company reputedly broadcasts identical broadcasting data within a wireless communication service area, the Internet broadcasting company needs to reputedly transmit identical broadcasting data to the wireless LAN access point 12. Therefore, the system of Fig. 1 is not efficient system and a work load of the Internet broadcasting server 11 is increased when a plurality of terminals 13 accesses simultaneously to the Internet broadcasting server 11.

In other word, a datagram is transmitted to a receiver based on a unicasting IP address and multicasting IP address according to a communication protocol such as a User Datagram protocol/Internet Protocol (UDP/IP) in case of conventional Internet broadcasting. For receiving the multicasting datagram, the receiver needs to go through complex steps such as allocation of IP address and registration of receiving at multicasting router by using Internet Group Management Protocol IGMP. Moreover, the datagram needs to be transmitted to the wireless LAN access point 12 and the IP addresses need to be allocated to every terminal 13 within a communication area of the wireless LAN AP 12 for receiving the wireless Internet broadcasting data. Also, the IP address of the Internet broadcasting server 11 needs to be set at the terminal 13 for receiving the datagram.

Generally, there are three methods for transmitting datagram in the Internet such as unicasting, multicasting and anycasting.

The unicasting method transmits the datagram to only IP address of assigned receiver (terminal 13) from a transmitter (server 11) since the transmitter (server 11) is correspondence to the receiver (terminal 13) by one-to-one manner.

In case of the multicasting, the datagram is transmitted to a plural of receivers (terminals 13) included in a specific group. Therefore, a router contains registered IP addresses of receivers (terminals 13) and the datagram is transmitted to the terminals having the registered IP addresses.

In case of the broadcasting method, the datagram is transmitted to unspecified receivers (terminal 13).

In the meantime, the anycasting method transmits the datagram to a terminal, which has identical subnet address and located nearest to transmitter. It is used for IP version 6 (IPv6).

However, in case of broadcasting method, traffic of data may be congested since data traffic is spread to whole network among the transmitter and the receivers. It causes malfunctioning of communication. Therefore, the broadcasting method is not used for transmitting the datagram and it is used only for specific purpose such as confirmation of media access control (MAC) address or IP address in a subnet.

Also, the multicasting method requires complex steps including registering of receiving to multicasting router by using IGMP and multicasting routers need to be equipped at every networks. Therefore, it is difficult that the multicasting method is practically used.

Since the above mentioned disadvantaged of methods, the unicasting method is generally used for the Internet broadcasting service. In the unicasting method, the Internet broadcasting server 11 and a receiver 13 are correspondence by the one-to-one manner. However, the unicasting method also has disadvantages such as requirement of allocating unique IP address for each of receivers 13 and presetting of web address of Internet broadcasting server site 11 at the receiver 13 for receiving the data of the Internet broadcasting service.

Furthermore, in the Internet broadcasting service provided by the unicasting method, a workload of Internet server 11 and network is increased since a plurality of terminals 13 is simultaneously accessed to the Internet broadcasting server 11.

Moreover, in case that the Internet broadcasting server 11 reputedly transmits identical data to receivers 13 located in a wireless communication service area, the workload of server 11 is increased and data communication traffic is also increased.

Recently, wireless LAN, which is one of wireless base station, has been rapidly popularized in an area of dense population and therefore, valuable local information can be provided to users in a wireless communication service area by using the wireless LAN. Such a population of wireless LAN can be used for providing the Internet broadcasting service to users by using wireless base stations such as a mobile communication base station or a buletooth station.

Therefore, it has been demanded that an Internet broadcasting service system can reduce a workload of server, increase convenience of users by automatically receiving broadcasting data in a service area of wireless communication without complex steps of allocating unique IP address of terminals, also reduce a workload of server by preventing to reputedly transmitting identical broadcasting data and reduce communication traffic.

From WO 01/65817 a communication system including mobile units distributed within a wireless communication network is known. The mobile units are connected to a packet switched network via a proxy server. The proxy server converts unicast data packets coming from the packets switched network to multicast data packets being transmitted to the mobile units.

### Disclosure of the Invention

In a first aspect, the invention provides a data broadcasting apparatus for broadcasting data within a wireless communication service area according to independent claim 1. In further aspects, the invention provides a method for broadcasting data according to independent claim 8, and a non-transitory computer readable recording medium according to independent claim 12. Further embodiments of the invention are defined by the dependent claims.

### Brief Description of the Drawing(s)

The above and other objects and features of the present invention will become apparent from the following description of the preferred embodiments given in conjunction with the accompanying drawings, in which:
Fig. 1 is a diagram showing a system for conventional data broadcasting service system;
Fig. 2 is a diagram illustrating a data broadcasting apparatus equipped in a data broadcasting service system in accordance with a preferred embodiment of the present invention;
Fig. 3 shows a structure of Internet protocol datagram;
Fig. 4 shows a detailed view of a payload in an IP datagram for broadcasting in accordance with a preferred embodiment of the present invention;
Fig. 5 is a flowchart for explaining a method for transmitting broadcasting data within a wireless communication service area in accordance with a preferred embodiment of the present invention; and
Fig. 6 shows steps for providing local Internet broadcasting service by implementing the broadcasting data apparatus 20 of the present invention in real driveways.

### Modes for carrying out the Invention

Other objects and aspects of the invention will become apparent from the following description of the embodiments with reference to the accompanying drawings, which is set forth hereinafter.

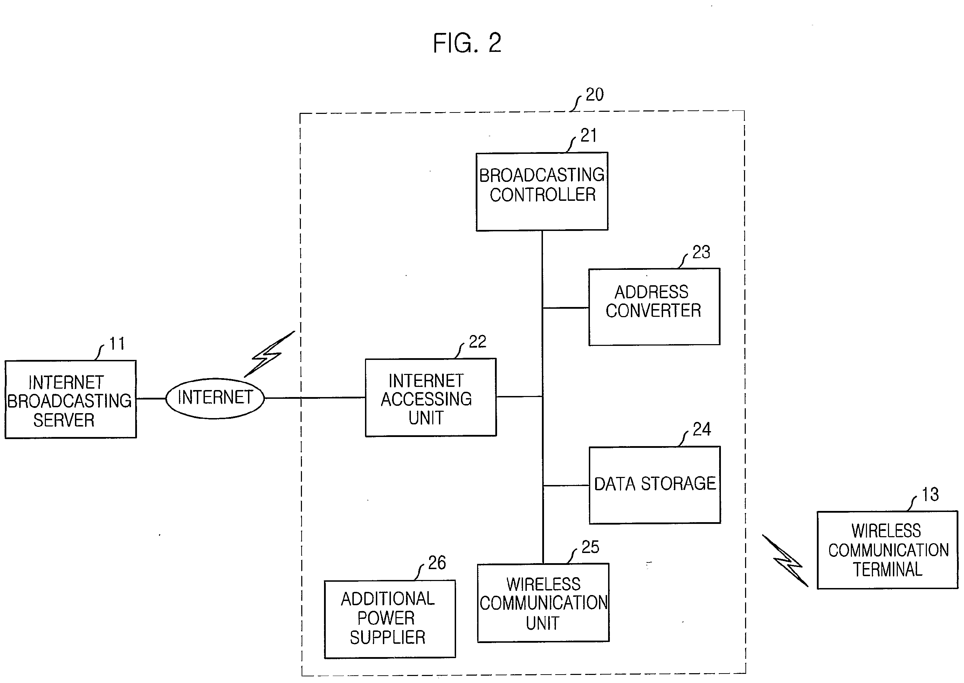

Fig. 2 is a diagram illustrating a data broadcasting apparatus equipped in a data broadcasting service system in accordance with a preferred embodiment of the present invention.

Referring to Fig. 2, the data broadcasting service system includes an Internet broadcasting server 11, a wireless communication terminal 13 and a data broadcasting apparatus 20 equipped in a wireless base station.

The wireless communication terminal 13 is a communication device, which can be carried by a user, wherein the communication device is a wireless communication terminal 13 including a personal digital assistant (PDA), a notebook computer, a smart phone, a cellular phone or a PCS phones and a next generation wireless communication terminal includes an international mobile telecommunication (IMT)-2000 terminal and universal mobile telecommunication service (UMTS) terminal.

The data broadcasting apparatus 20 is equipped in the wireless base station and the Internet broadcasting server 11 receives the broadcasting data through the Internet. The broadcasting data is transmitted to a plurality of terminal 13 through the wireless communications.

Referring to Fig. 2, the data broadcasting apparatus 20 includes a broadcasting controller 21 for controlling broadcasting service within a wireless communication service area, an Internet accessing unit 22 for receiving a datagram for broadcasting through the Internet, an address converter 23 for converting a destination IP address of the datagram to a predetermined communication type of IP address which is suitable for broadcasting under control of the broadcasting controller 21 and a wireless communication unit 25 for transmitting the datagram, which is converted to the predetermined communication type of IP address, to correspondent terminal 13 located within the wireless service area according to a predetermined communication type under control of the broadcasting controller 21. Also, the broadcasting data apparatus 20 further includes a data storage 26 for storing the converted datagram of the predetermined communication type such as broadcasting, multicasting and anycasting and reputedly transmitting the stored datagram in every predetermined interval according to the predetermined communication type through the wireless communication unit 25 and an additional power supplier 26 for supplying additional power to the data broadcasting apparatus 20 in case of emergency situation.

Hereinafter, detailed operations of the data broadcasting apparatus 20 are explained.

The Internet accessing unit 22 receives a datagram from the Internet broadcasting server 11 by providing a connection to the Internet.

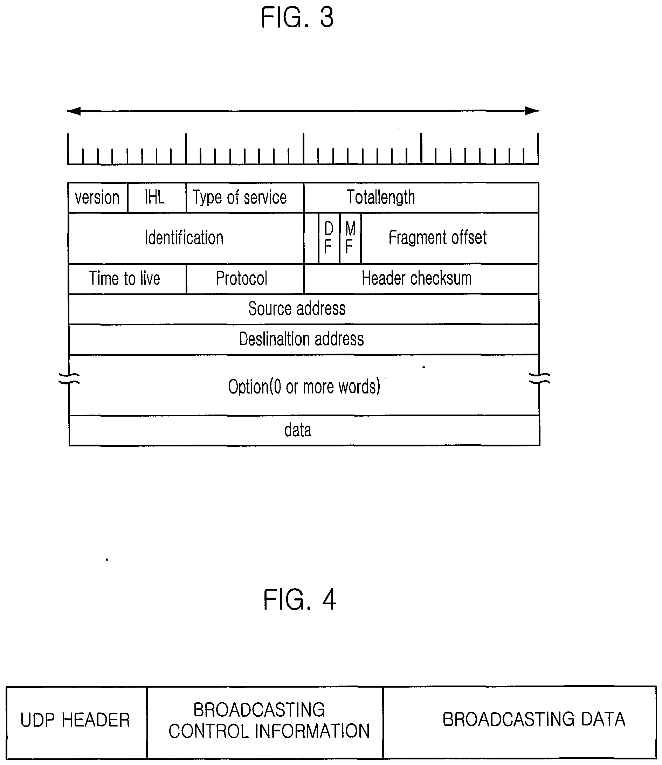

Fig. 3 shows a structure of Internet protocol datagram. As shown in Fig. 3, the datagram includes a source address and a destination address as Internet protocol IP address.

For example, a unique Internet protocol IP address is allocated to a wireless LAN accessing point AP for identifying the datagram for broadcasting. The Internet broadcasting server 11 transmits the datagram having an IP address of wireless LAN access point (AP) controlling corresponding area as a destination IP address for broadcasting local information of each area. The Internet accessing unit 22 recognizes a datagram having a destination IP address matched to the IP address of the wireless LAN accessing point (AP) as a datagram for broadcasting. At this time, if a destination address of a received datagram is not an IP address for broadcasting, the wireless LAN accessing point (AP) performs normal operations.

For another example, by previously setting a port number of user datagram protocol UDP as predetermined number, the datagram for broadcasting can be classified by checking the port number and an IP address of received datagram.

For another example, the data broadcasting apparatus 20 can also classify the datagram for broadcasting by analyzing a data filed in the payload of the UDP datagram.

In a meantime, the address converter 23 converts a destination IP address included in the received datagram to an address of a predetermined type, which is suitable for a wireless broadcasting method.

For example, the destination IP address is converted to an Internet protocol (IP) address for broadcasting such as 255. 255. 255. 255 or the destination IP address is converted to predetermined type address, which is suitable for multicasting or anycasting.

For another example, a media access control (MAC) address of the destination or datalink address in the frame header can be set to the address of broadcasting or multicasting for all terminals 13 within wireless communication service area in order to received broadcasting data.

For further another example, each datalink address of the terminals can be stored at the broadcasting data apparatus 20 for transmitting broadcasting data to each of terminals by the datalink addresses.

The wireless communication terminal 13 receives data of Internet broadcasting service within the wireless communication service area without setting the Internet address of a broadcasting server of corresponding web sites and displays a desired datagram among received datagram. Additional information of received datagram can be supplied by using the link information, for example, by clicking on the linked text, one can move to corresponding web site. Also, for receiving broadcasting data, a function of automatically recognizing the wireless communication network is equipped in the wireless communication terminal 13. Furthermore, the datagram for broadcasting can be transmitted to other terminals within the wireless communication service area. Therefore, the users can share and pass received useful information each others.

Fig. 4 shows a detailed view of a data field in a UDP datagram for broadcasting in accordance with a preferred embodiment of the present invention.

Referring to Fig. 4, a data field includes broadcasting control information consecutively coupled to UDP header. Therefore, the broadcasting controlling unit 21 reads the broadcasting control information and controls to broadcast the datagram for broadcasting and/or storing the datagram according to the broadcasting control information.

The broadcasting control information contains information including a store order field for determining whether the datagram is stored or not, a broadcasting time field for indicating a time for broadcasting and a broadcasting repetition field for indicating the number of broadcasting repetition or interval, priority and size.

Also, a header can include additional information filed for user verification and security. The operation of verification and security can be performed by using two-way communication function.

In a meantime, the wireless communication unit 25 transmits the datagram including new destination IP address to plural of receiving terminals 13 within a communication network through a wireless base station. In here, the new destination IP address is an address suitable for broadcasting and the plural of terminals 13 can receive the datagram by using the new destination address. Furthermore, a terminal can receive the datagram during moving.

The data storage 24 can be additionally included to the data broadcasting apparatus 20. The data storage 24 stores received datagram through the Internet and the stored datagram can be reputedly transmitted according to the broadcasting control information in predetermined interval with the predetermined repetition times.

Hereinafter, operations of the data broadcasting apparatus 20 of the present invention are explained in detail.

The wireless LAN accessing point (AP) is connected to the Internet through a wired or wireless communication link. The data broadcasting apparatus 20 equipped at the wireless LAN accessing point (AP) transmits a datagram for broadcasting to the terminals 13 through the wireless communication link. At this time, the Internet broadcasting server 11 transmits the datagram for broadcasting to the data broadcasting apparatus 20. Inhere, a destination address of the datagram is a unique IP address for unicasting of the wireless LAN accessing point (AP) equipped in the data broadcasting apparatus 20 and, therefore, it can be distinguished according to each of wireless LAN accessing point (AP). Also, pre-defined IP address for broadcasting, multicasting or anycasting can be used as converted destination IP address of the datagram. Furthermore, a received datagram for broadcasting is determined at the data broadcasting apparatus 20 by setting a port number of UDP protocol, which is a high protocol layer, by using a predetermined number and transmitting the port number of UDP protocol.

The Internet accessing unit 22 classifies IP address of received datagram and it is transmitted to the control unit 21 when the classified IP address is a unique IP address allocated to the wireless LAN accessing point (AP). If it is not, the wireless LAN accessing point (AP) performs normal operations.

In case of the classified IP address is the address of the wireless LAN accessing point (AP), the broadcasting controller 21 stores data related a size, an interval of broadcasting by confirming the broadcasting control information. The broadcasting controller 21 transmits entire datagram to the address converter 23 and the address converter 23 converts a destination IP address of the datagram to an address for broadcasting, multicasting or anycasting and converted datagram is stored at the data storage 24. The broadcasting controller 21 reputedly transmits the broadcasting data stored in the data storage 24 in every predetermined interval based on the broadcasting control information of the datagram through the wireless communication unit 25.

At this time, the wireless communication unit 25 transmits the datagram for broadcasting and/or datagram for the wireless LAN communication within the wireless communication service area. All terminals 13 located in the wireless communication service area can receive the datagram based on the IP address of broadcasting or multicasting. The terminal 13 can receive the datagram without allocation of IP address since the destination IP address of datagram is for either of broadcasting, multicasting or anycasting address. The datagram is verified as a datagram for broadcasting by checking a port number and existence of UDP datagram in the received datagram. The received datagram is passed to an application program of the terminal 13 for performing to display texts and/or play sounds or image data included in the datagram according to suitable playing method. Also, desired portion of contents included in the datagram can be played by filtering unnecessary received data out according to preset user preference.

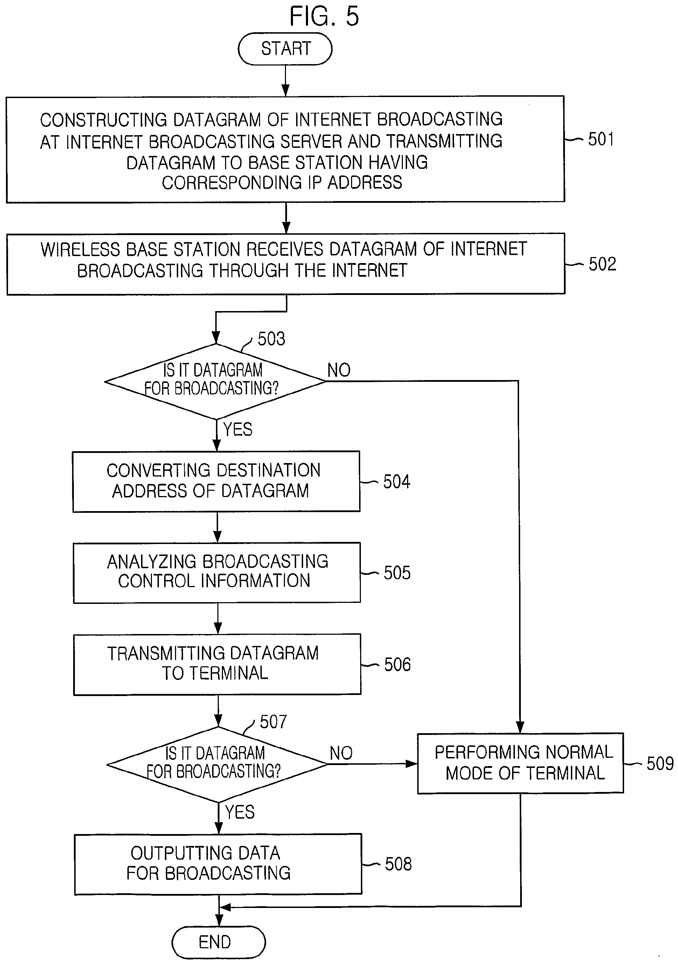

Fig. 5 is a flowchart for explaining a method for transmitting broadcasting data within a wireless communication service area in accordance with a preferred embodiment of the present invention.

At step 501, a datagram for broadcasting is constructed at an Internet broadcasting server 11 and the datagram is transmitted to corresponding base station. In step 501, the Internet broadcasting server 11 assigns the protocol ID of 17 as UDP protocol and sets a port number for determining whether the received datagram is a datagram for broadcasting or not. Also, broadcasting control information is inserted at the front of the payload of the UDP datagram.

At step 502, the datagram of the Internet broadcasting server 11 is received through the Internet and the broadcasting data apparatus 20 determines whether the received datagram is the datagram for broadcasting or not at step of 503. In the steps 502 and 503, the received datagram is verified by using a destination address included in the datagram, a protocol number or a port number of UDP protocol. Also, combination number of the destination address, the port number or the protocol number can be used for verifying the datagram.

As a result of the determination, if the received datagram is the datagram for broadcasting, the destination address of the datagram is converted at step 504. In step 504, a new destination address has to be suitable for broadcasting in order to receive the datagram by the plural of terminals 13. For example, the new destination address can be one of broadcasting IP address, a multicasting IP address or anycasting IP address. Furthermore, MAC address or datalink address of destination in the frame header can be set to an address for broadcasting or multicasting.

At step 505, the broadcasting controller 21 analyzes broadcasting control information included in the datagram and the datagram is transmitted to the terminals 13 located in the wireless communication service area through the wireless communication unit 25 according to analysis result at step of 506. In steps 505 and 506, transmitted datagram can be stored according to analysis result of the broadcasting controlling information and the stored datagram can be reputedly broadcasted to plural of terminals 13 according to the broadcasting controlling information such as the number of repetition and predetermined interval for broadcasting. Also, information for verification of the Internet broadcasting server 11 and security can be included in the broadcasting controlling information.

In a meantime, the terminal 13 determines whether the received datagram is a datagram for broadcasting or not at step 507. That is, the terminal 13 determines whether IP address of the received datagram is set for broadcasting or not. If the IP address, of the received datagram is set for broadcasting, the terminal 13 also determines whether the received datagram is UDP datagram. Also, the preset port number is determined for verifying the datagram for broadcasting.

If the received datagram is for broadcasting, the terminal 13 outputs the received broadcasting data at step 508. In the step 508, a desired portion of broadcasting data can be played by setting an application program of the terminal 13.

If the received datagram is not for broadcasting, the terminal 13 performs normal operations at step 509.

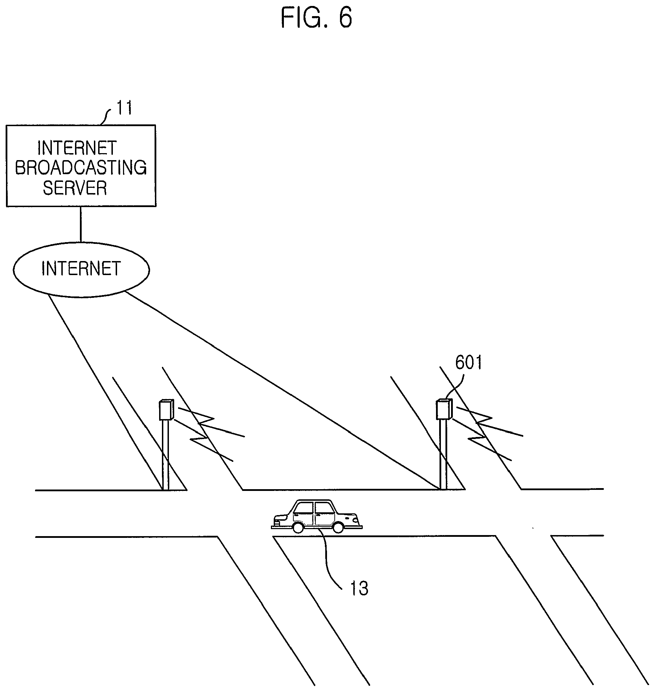

Fig. 6 is a view depicting an example of providing local Internet broadcasting service by using the broadcasting data apparatus 20 in accordance with a preferred embodiment of the present invention. Fig. 6 shows steps for providing local Internet broadcasting service by implementing the broadcasting data apparatus 20 of the present invention in real driveways.

Referring to Fig. 6, a wireless base station including the broadcasting data apparatus 601 is installed at a traffic signal of intersection and a datagram received through the Internet is broadcasted through the wireless base station 601. Therefore, a terminal 13 of vehicle, which is either of stopped or moved, can receive local Internet broadcasting service. The local broadcasting service can include various information such as news for construction of driveway, disaster, stock or weather forecast.

The terminal 13 receiving Internet broadcasting service can receive the datagram without unique IP address allocation since the destination IP address of the datagram is an address for broadcasting, multicasting or anycasting.

For example, the received datagram can be verified as a datagram for broadcasting by checking a port number of the received datagram and by determining whether the received datagram includes a UDP datagram. The application program installed in the terminal 13 plays text, sound, image data included in the received datagram.

For another example, a desired portion of datagram can be selectively using predefined data format and contents. That is, the terminal 13 can display desired data among received broadcasted data by filtering received broadcasted data according to setting of the application program in the terminal by the user. It is very similar to a radio receiver selecting desired broadcasting signal.

For further another example, the port number can be used differently for identifying the broadcasting data.

For still further another example, the header of datagram may include controlling information for constructing display image of the terminal.

For another example, the broadcasted data displayed at the terminal can be implemented as a mark up language in order to provide additional information of the broadcasted data by clicking a line of text linked to corresponding web sites and moving to the corresponding web sits. That is, two-way communication method can be occasionally provided.

For another example, an application program for playing the received broadcasted data can also be transmitted for improving the playing mode of the datagram or changing display image of the terminal.

For another example, in a case that a plurality of terminals having capable of wireless communication is communicated each others, the datagram for broadcasting received by one terminal can be shared and transmitted to other terminals.

For another example, consecutive distinction number can be assigned to header of the datagram for transmitting consecutive broadcasting datagram.

The present invention can be implemented not only to wireless LAN but also a wireless communication device for short and long distance communication including a mobile communication base station, a wireless beacon, a mobile dedicated short range communication (DSRC), a Bluetooth base. station and information communication device including a router and an exchanger for data.

Also, the present invention can be implemented not only to local broadcasting service but also wide area broadcasting service such as a sky wave broadcasting, a cable TV and a satellite TV broadcasting service.

The above-mentioned method of the present invention can be implemented as a program and the program can be stored into a computer readable recoding medium including CD-Rom, RAM, ROM, floppy disk, hard disk and magneto-optic disk.

As above mentioned, the present invention can effectively provide valuable local information to users of specific area. That is, distinct information according to area can be provided by using wireless base station installed in each area.

Also, the present invention can eliminate a complex problem of allocation IP address of terminals for Internet broadcasting service since each of receivers does not require a unique IP address allocation.

Furthermore, the present invention increase efficiency of providing broadcasting data from the Internet broadcasting server by reputedly transmitting previously broadcasted data in predetermined interval and predetermined times.

Moreover, the users can receive broadcasting information by using the Internet while they are moving. That is, a terminal of the user automatically receives the broadcasting data by entering boundary of specific area.

The present invention can reduce a workload of the Internet broadcasting server although the number of receivers of the Internet broadcasting service is increased.

While the present invention has been described with respect to certain preferred embodiments, it will be apparent to those skilled in the art that various changes and modifications may be made without departing from the scope of the invention as defined in the following claims.

## Claims

1. A data broadcasting apparatus (20) for broadcasting data within a wireless communication service area, the data broadcasting apparatus comprising:
a broadcasting control unit (21) configured to provide an internet broadcasting data service to a plurality of terminals (13) located within the wireless communication service area;
an internet access unit (22) configured to receive a datagram through the internet and determine whether the received datagram is a datagram for the internet broadcasting data service accessed by the plurality of terminals (13) by using a
combination of a destination address included in the datagram, a protocol number, and a port number of user datagram protocol, UDP;
an address convert unit (23) configured to replace the destination address of the received datagram with a predetermined address for providing the internet broadcasting data service, under control of the broadcasting control unit (21), when the received datagram is a datagram for the internet broadcasting data service; and
a wireless communication unit (25) configured to transmit the datagram having the replaced destination address to the plurality of terminals (13), under control of the broadcasting controlling unit (21).

2. The data broadcasting apparatus (20) as recited in the claim 1, further comprising:
a data store unit (24) configured to store the datagram having the replaced destination address, and repeatedly transmit the stored datagram in predetermined intervals through the wireless communication unit (21).

3. The data broadcasting apparatus (20) as recited in claim 1, further comprising:
an additional power supply unit (26) configured to supply additional power for the internet broadcasting data service in case of an emergency situation.

4. The data broadcasting apparatus (20) as recited in claim 1, wherein the datagram is transmitted from an internet broadcasting server to the data broadcasting apparatus (20) having a corresponding destination address through wired/wireless internet, and
wherein an identical broadcasting data is transmitted only one time to the data broadcasting apparatus (20) for broadcasting local area information.

5. The data broadcasting apparatus (20) as recited in claim 1, wherein the datagram comprises a header including a consecutive distinction number for continuously transmitting consecutive datagrams for the internet broadcasting data service.

6. The data broadcasting apparatus (20) as recited in claim 1, wherein the datagram comprises broadcasting control information, and
wherein the broadcasting control information comprises:
a store order field for determining whether the datagram is stored or not;
a broadcasting time field for determining a broadcasting time;
a broadcasting repetition field including a number of repetition times, an interval, a priority, and a size.

7. The data broadcasting apparatus (20) as recited in claim 6, wherein the broadcasting control unit (21) analyzes the broadcasting control information included in the datagram, controls transmission of the datagram according to a result of analyzing the broadcasting control information, stores the transmitted datagram for repeatedly broadcasting an identical datagram, and controls to repeatedly broadcast the datagram to the plural of terminals at predetermined intervals and repetition times.

8. A method for broadcasting data in a wireless communication service area, the method comprising the steps of:
a) receiving through an internet by a data broadcasting apparatus (20), a datagram including a destination address;
b) determining whether the received datagram is a datagram for an internet broadcasting data service accessed by a plurality of terminals (13) located within the wireless communication service area by using a combination of the destination address included in the datagram, a protocol number, and a port number of user datagram protocol, UDP;
c) replacing, by the data broadcasting apparatus (20), the destination address of the datagram with a predetermined address for providing the internet broadcasting data service, when the received datagram is a datagram for the internet broadcasting data service; and
d) transmitting, by the data broadcasting apparatus (20), the datagram having the replaced destination address to the plurality of terminals (13).

9. The method as recited in the claim 8, further comprising:
e) storing, by the data broadcasting apparatus (20), the datagram having the replaced destination address; and
f) repeatedly transmitting, by the data broadcasting apparatus (20), the stored datagram within a predetermined intervals.

10. The method as recited in claim 8, wherein the datagram comprises broadcasting control information, and
wherein the broadcasting control information comprises a store order field for determining whether the datagram is stored or not, a broadcasting time field for determining a broadcasting time, a broadcasting repetition field including a number of repetition times, an interval, a priority, and a size.

11. The method as recited in claim 8, wherein the datagram comprises a header including a consecutive distinction number for continuously transmitting consecutive datagram for the internet broadcasting data service.

12. A non-transitory computer readable recording medium for recording a program for controlling a data broadcasting apparatus (20) to implement a method of broadcasting data in a wireless communication service area, comprising the functions of:
a) receiving a datagram including a destination address through an internet;
b) determining whether the received datagram is a datagram for an internet broadcasting data service accessed by a plurality of terminals (13) located within the wireless communication service area by using a combination of the destination address included in the datagram, a protocol number, and a port number of user datagram protocol, UDP;
c) replacing the destination address of the datagram with a predetermined address for providing the internet broadcasting data service, when the received datagram is a datagram for the internet broadcasting data service; and
d) transmitting the datagram having the replaced destination address to the plurality of terminals (13).

13. The non-transitory computer readable recording medium as recited in the claim 12, further comprising:
e) storing the datagram having the replaced destination address; and
f) repeatedly transmitting the stored datagram within a predetermined intervals.

14. System comprising an apparatus (20) as recited in one of the claims 1 - 7and a corresponding terminal (13).

15. The system as recited in claim 14, wherein the terminal automatically detects a wireless communication network for receiving broadcasting data within the wireless communication service area.

16. The system as recited in claim 14, wherein the terminal transmits a datagram for broadcasting to other terminal within the wireless communication service area.

## Patentansprüche

1. Datenrundsendegerät (20) zum Rundsenden von Daten innerhalb eines drahtlosen Kommunikationsdienstebereichs, wobei das Datenrundsendegerät umfasst:
eine Rundsendesteuereinheit (21), die dazu eingerichtet ist, einen Internet-Rundsendedatendienst für eine Vielzahl von Endgeräten (13) bereitzustellen, die sich innerhalb des drahtlosen Kommunikationsdienstebereichs befinden;
eine Internet-Zugangseinheit (22), die dazu eingerichtet ist, ein Datagramm über das Internet zu empfangen und zu bestimmen, ob das empfangene Datagramm ein Datagramm für den Internet-Rundsendedatendienst ist, auf den die Vielzahl von Endgeräten (13) zugreift, unter Verwendung einer Kombination einer Zieladresse, die in dem Datagramm enthalten ist, einer Protokollnummer und eine Portnummer des Benutzer-Datagrammprotokolls, UDP;
eine Adressumwandlungseinheit (23), die dazu eingerichtet ist, die Zieladresse des empfangenen Datagramms mit einer vorbestimmten Adresse zum Bereitstellen des Internet-Rundsendedatendienstes unter Steuerung der Rundsendesteuereinheit (21) zu ersetzen, wenn das empfangene Datagramm ein Datagramm für den Internet-Rundsendedatendienst ist; und
eine drahtlose Kommunikationseinheit (25), die dazu eingerichtet ist, das Datagramm mit der ersetzten Zieladresse zu der Vielzahl von Endgeräten (13) unter der Steuerung der Rundsendesteuereinheit (21) zu senden.

2. Datenrundsendegerät (20) nach Anspruch 1, weiterhin umfassend:
eine Datenspeichereinheit (24), die dazu eingerichtet ist, das Datagramm mit der ersetzten Zieladresse zu speichern, und wiederholt das gespeicherte Datagramm in vorbestimmten Intervallen durch die drahtlose Kommunikationseinheit (21) zu senden.

3. Datenrundsendegerät (20) nach Anspruch 1, weiterhin umfassend:
eine zusätzliche Energieversorgungseinheit (26), die dazu eingerichtet ist, zusätzliche Energie für den Internet-Rundsendedatendienst im Falle einer Notfallsituation zuzuführen.

4. Datenrundsendegerät (20) nach Anspruch 1, bei dem das Datagramm von einem Internet-Rundsende-Server an das Datenrundsendegerät (20) mit einer entsprechenden Zieladresse über drahtgebundenes/drahtloses Internet gesendet wird, und
identische Rundsendedaten nur einmal an das Datenrundsendegerät (20) zum Rundsenden von lokalen Bereichsinformationen gesendet werden.

5. Datenrundsendegerät (20) nach Anspruch 1, bei dem das Datagramm einen Header umfasst, der eine fortlaufende Unterscheidungsnummer zum kontinuierlichen Senden aufeinanderfolgender Datagramme für den Internet-Rundsendedatendienst umfasst.

6. Datenrundsendegerät (20) nach Anspruch 1, bei dem das Datagramm Rundsendesteuerinformationen umfasst und die Rundsendesteuerinformationen umfassen:
ein Speicherordnungsfeld zum Bestimmen, ob das Datagramm gespeichert ist oder nicht;
ein Rundsendezeitfeld zum Bestimmen einer Rundsendezeit;
ein Rundsendewiederholungsfeld, das eine Anzahl von Wiederholungszeiten, ein Intervall, eine Priorität und eine Größe umfasst.

7. Datenrundsendegerät (20) nach Anspruch 6, bei dem die Rundsendesteuereinheit (21) die Rundsendesteuerinformationen analysiert, die in dem Datagramm enthalten sind, das Senden des Datagramms gemäß einem Ergebnis des Analysierens der Rundsendesteuerinformationen steuert, das gesendete Datagramm zum wiederholten Senden eines identischen Datagramms speichert und das wiederholte Senden des Datagramms an die Vielzahl von Endgeräten in vorbestimmten Intervallen und Wiederholungszeiten steuert.

8. Verfahren zum Rundsenden von Daten in einem drahtlosen Kommunikationsdienstebereich, wobei das Verfahren die folgenden Schritte umfasst:
a) Empfangen eines Datagramms mit einer Zieladresse über ein Internet durch ein Datenrundsendegerät (20);
b) Bestimmen, ob das empfangene Datagramm ein Datagramm für einen Internet-Rundsendedatendienst ist, auf den eine Vielzahl von Endgeräten (13) innerhalb des drahtlosen Kommunikationsdienstebereichs zugreift, unter Verwendung einer Kombination der in dem Datagramm enthaltenen Zieladresse, einer Protokollnummer und eine Port-Nummer des Benutzer-Datagramm-Protokolls, UDP;
c) Ersetzen der Zieladresse des Datagramms durch das Datenrundsendegerät (20) mit einer vorbestimmten Adresse zum Bereitstellen des Internet-Rundsendedatendienstes, wenn das empfangene Datagramm ein Datagramm für den Internet-Rundsendedatendienst ist; und
d) Senden des Datagramms mit der ersetzten Zieladresse zu der Vielzahl von Endgeräten (13) durch das Datenrundsendegerät (20).

9. Verfahren nach Anspruch 8, weiterhin umfassend:
e) Speichern des Datagramms mit der ersetzten Zieladresse durch das Datenrundsendegerät (20); und
f) wiederholtes Senden des gespeicherten Datagramms durch das Datenrundsendegerät (20) innerhalb vorbestimmter Intervalle.

10. Verfahren nach Anspruch 8, bei dem das Datagramm Rundsende-Steuerinformationen umfasst und
bei dem die Rundsende-Steuerinformationen ein Speicherordnungsfeld zum Bestimmen, ob das Datagramm gespeichert ist oder nicht, ein Rundsendezeitfeld zum Bestimmen einer Rundsendezeit, ein Rundsendewiederholungsfeld einschließlich einer Anzahl von Wiederholungszeiten, ein Intervall, eine Priorität und eine Größe umfassen.

11. Verfahren nach Anspruch 8, bei dem das Datagramm einen Header umfasst, der eine fortlaufende Unterscheidungsnummer zum fortlaufenden Senden aufeinanderfolgender Datagramme für den Internet-Rundsendedatendienst umfasst.

12. Nicht-transitorisches computerlesbares Aufzeichnungsmedium zum Aufzeichnen eines Programms zum Steuern eines Datenrundsendegerätes (20) zum Ausführen eines Verfahrens des Rundsendens von Daten in einem drahtlosen Kommunikationsdienstebereich, umfassend folgende Funktionen:
a) Empfangen eines Datagramms einschließlich einer Zieladresse über ein Internet;
b) Bestimmen, ob das empfangene Datagramm ein Datagramm für einen Internet-Rundsendedatendienst ist, auf den durch eine Vielzahl von Endgeräten (13) zugegriffen wird, die sich innerhalb des drahtlosen Kommunikationsdienstebereichs befinden, durch Verwenden einer Kombination der Zieladresse, die in dem Datagramm enthalten ist, einer Protokollnummer und einer Port-Nummer des Benutzer-Datagramm-Protokolls, UDP;
c) Ersetzen der Zieladresse des Datagramms durch eine vorbestimmte Adresse zum Bereitstellen des Internet-Rundsendedatendienstes, wenn das empfangene Datagramm ein Datagramm für den Internet-Rundsendedatendienst ist; und
d) Senden des Datagramms mit der ersetzten Zieladresse zu der Vielzahl von Endgeräten (13).

13. Nicht-transitorisches computerlesbares Aufzeichnungsmedium nach Anspruch 12, weiterhin umfassend:
e) Speichern des Datagramms mit der ersetzten Zieladresse; und
f) wiederholtes Senden des gespeicherten Datagramms innerhalb vorbestimmter Intervalle.

14. System, umfassend eine Vorrichtung (20) nach einem der Ansprüche 1 bis 7 und ein entsprechendes Endgerät (13).

15. System nach Anspruch 14, bei dem das Endgerät automatisch ein drahtloses Kommunikationsnetzwerk zum Empfangen von Rundsendedaten innerhalb des drahtlosen Kommunikationsdienstebereichs erfasst.

16. System nach Anspruch 14, bei dem das Endgerät ein Datagramm zum Rundsenden an ein anderes Endgerät innerhalb des drahtlosen Kommunikationsdienstebereichs sendet.

## Revendications

1. Appareil de diffusion de données (20) pour la diffusion de données dans une zone de service de communication sans fil, l'appareil de diffusion de données comprenant:
une unité de commande de diffusion (21) configurée pour fournir un service de données de diffusion Internet à une pluralité de terminaux (13) situés dans la zone de service de communication sans fil;
une unité d'accès Internet (22) configurée pour recevoir un datagramme sur Internet et déterminer si le datagramme reçu est un datagramme pour le service de données de diffusion Internet auquel accède la pluralité de terminaux (13) en utilisant la combinaison d'une adresse de destination incluse dans le datagramme, d'un numéro de protocole et d'un numéro de port du protocole de datagramme utilisateur, UDP;
une unité de conversion d'adresse (23) configurée pour remplacer l'adresse de destination du datagramme reçu avec une adresse prédéterminée pour fournir le service de données de diffusion Internet, sous le contrôle de l'unité de commande de diffusion (21), lorsque le datagramme reçu est un datagramme pour le service de données de diffusion sur Internet; et
une unité de communication sans fil (25) configurée pour transmettre le datagramme contenant l'adresse de destination remplacée à la pluralité de terminaux (13), sous le contrôle de l'unité de commande de diffusion (21).

2. Appareil de diffusion de données (20) selon la revendication 1, comprenant en outre:
une unité de stockage de données (24) configurée pour stocker le datagramme contenant l'adresse de destination remplacée et transmettre de manière répétée le datagramme stocké à des intervalles prédéterminés par le biais de l'unité de communication sans fil (21).

3. Appareil de diffusion de données (20) selon la revendication 1, comprenant en outre:
une unité d'alimentation supplémentaire (26) configurée pour fournir une puissance supplémentaire au service de données de diffusion Internet en cas de situation d'urgence.

4. Appareil de diffusion de données (20) selon la revendication 1, dans lequel le datagramme est transmis depuis un serveur de diffusion Internet vers l'appareil de diffusion de données (20) contenant une adresse de destination correspondante par le biais d'Internet câblé/sans fil, et
où une donnée de diffusion identique est transmise une seule fois à l'appareil de diffusion de données (20) pour diffuser des informations de zone locale.

5. Appareil de diffusion de données (20) selon la revendication 1, dans lequel le datagramme comprend un en-tête comprenant un numéro de distinction consécutif pour transmettre de manière continue des datagrammes consécutifs pour le service de données de diffusion sur Internet.

6. Appareil de diffusion de données (20) selon la revendication 1, dans lequel le datagramme comprend des informations de commande de diffusion, et
dans lequel l'information de commande de diffusion comprend:
un champ d'ordre de stockage pour déterminer si le datagramme est stocké ou non;
un champ d'heure de diffusion pour déterminer une heure de diffusion;
un champ de répétition de diffusion comprenant un nombre de temps de répétition, un intervalle, une priorité et une taille.

7. Appareil de diffusion de données (20) selon la revendication 6, dans lequel l'unité de commande de diffusion (21) analyse les informations de commande de diffusion incluses dans le datagramme, commande la transmission du datagramme en fonction du résultat de l'analyse des informations de commande de diffusion, stocke le datagramme transmis pour la diffusion répétée d'un datagramme identique, et commande la diffusion répétée du datagramme à la pluralité de terminaux à des intervalles prédéterminés et des heures de répétition prédéterminées.

8. Procédé de diffusion de données dans une zone de service de communication sans fil, le procédé comprenant les étapes consistant à:
a) recevoir par le biais d'un appareil de diffusion de données sur Internet (20) un datagramme contenant une adresse de destination;
b) déterminer si le datagramme reçu est un datagramme pour un service de données de diffusion sur Internet auquel accède une pluralité de terminaux (13) situés dans la zone de service de communication sans fil en utilisant une combinaison de l'adresse de destination incluse dans le datagramme, du numéro de protocole et du numéro de port du protocole de datagramme utilisateur, UDP,
c) remplacer, par l'appareil de diffusion de données (20), l'adresse de destination du datagramme reçu avec une adresse prédéterminée pour fournir le service de données de diffusion Internet, lorsque le datagramme reçu est un datagramme pour le service de données de diffusion sur Internet; et
d) transmettre, par l'appareil de diffusion de données (20), le datagramme contenant l'adresse de destination remplacée à la pluralité de terminaux (13).

9. Procédé selon la revendication 8, consistant en outre à:
e) stocker, par l'appareil de diffusion de données (20), le datagramme contenant l'adresse de destination remplacée; et
f) transmettre de manière répétée, par l'appareil de diffusion de données (20), le datagramme stocké selon des intervalles prédéterminés.

10. Procédé selon la revendication 8, dans lequel le datagramme comprend des informations de commande de diffusion, et
dans lequel les informations de commande de diffusion comprennent un champ d'ordre de stockage pour déterminer si le datagramme est stocké ou non, un champ d'heure de diffusion pour déterminer un temps de diffusion, un champ de répétition de diffusion comprenant un nombre de temps de répétition, un intervalle, une priorité et une taille.

11. Procédé selon la revendication 8, dans lequel le datagramme comprend un en-tête comprenant un numéro de distinction consécutif pour transmettre de manière continue des datagrammes consécutifs pour le service de données de diffusion sur Internet.

12. Support d'enregistrement lisible par ordinateur non transitoire pour enregistrer un programme destiné à commander un appareil de diffusion de données (20) pour mettre en oeuvre un procédé de diffusion données dans une zone de service de communication sans fil, comprenant les fonctions suivantes:
a) recevoir un datagramme comprenant une adresse de destination via un Internet;
b) déterminer si le datagramme reçu est un datagramme pour un service de données de diffusion sur Internet auquel accède une pluralité de terminaux (13) situés dans la zone de service de communication sans fil en utilisant une combinaison de l'adresse de destination incluse dans le datagramme, du numéro de protocole et du numéro de port du protocole de datagramme utilisateur, UDP;
c) remplacer l'adresse de destination du datagramme reçu avec une adresse prédéterminée pour fournir le service de données de diffusion sur Internet, lorsque le datagramme reçu est un datagramme pour le service de données de diffusion sur Internet; et
d) transmettre le datagramme contenant l'adresse de destination remplacée à la pluralité de terminaux (13).

13. Support lisible par ordinateur non transitoire selon la revendication 12, dans lequel les opérations comprennent en outre:
e)stocker le datagramme contenant l'adresse de destination remplacée; et
f) transmettre de manière répétée le datagramme stocké selon des intervalles prédéterminés.

14. Système comprenant un appareil (20) selon l'une quelconque des revendications 1 à 7 et un terminal correspondant (13).

15. Système selon la revendication 14, dans lequel le terminal détecte automatiquement un réseau de communication sans fil pour recevoir des données de diffusion des données dans la zone de service de communication sans fil.

16. Système selon la revendication 14, dans lequel le terminal transmet un datagramme pour diffusion vers un autre terminal dans la zone de service de communication sans fil.
